# EUROPEAN PATENT APPLICATION

(11) **EP 3 185 531 A1**
(43) Date of publication of application: **28.06.2017**
(21) Application number: 16204447.3
(22) Date of filing: 15.12.2016
(51) Int. Cl.: H04N 1/32, H04N 1/00, G06F 3/0489, G06F 3/02, G06F 3/048, G06F 3/01

(54) **IMAGE PROCESSING APPARATUS AND DESTINATION SETTING METHOD USED IN IMAGE PROCESSING APPARATUS**

(30) Priority: 22.12.2015 JP 2015249743; 22.04.2016 JP 2016086522
(71) Applicant: Kabushiki Kaisha Toshiba, Tokyo 105-8001 (JP); Toshiba TEC Kabushiki Kaisha, Tokyo 141-0032 (JP)
(72) Inventor: YAMANISHI, Hitoshi, Shinagawa-ku, Tokyo 141-8562 (JP)
(74) Representative: Takeuchi, Maya

(57) **Abstract**

An image processing apparatus according to an embodiment includes a display unit that displays a destination selection screen and a destination registration screen. A detection unit detects a selection with respect to the destination selection screen indicating a selected destination from a plurality of selectable destinations. An interface connects an external input device to the image processing apparatus, and receives an input from the external input device. The destination registration screen is updated to display one or more selected destinations. In response to the input being received from the external input device, the display unit changes the first region of the operation screen from the destination selection screen to an input screen in which destination information input using the external input device is displayed. In response to a detected transmission input, an image is transmitted to each destination displayed in the destination registration region.

## Description

### FIELD

Embodiments described herein relate generally to an image processing apparatus and a destination setting method used in the image processing apparatus, as well as a non-transitory computer readable medium containing instructions for causing an image processing apparatus to perform the steps of the image processing method, and a computer program product storing executable code for the image processing method.

### BACKGROUND

A multi-functional peripheral may include a display unit with a touch panel serving as user interface instead of hard keys such as numeric keys. In some cases, the hard keys may be additionally provided. Even when information such as numerals is input via the hard keys, the multi-functional peripheral may still display a direct input screen (such as a numeral input screen) in order to receive and display the input information.

However, it may be difficult for the display unit of the multi-functional peripheral to simultaneously display the direct input screen and an operation screen other than the direct input screen due to the size of the screen. When information is input with the touch panel, the multi-functional peripheral has a problem that user operations are required to switch from the direct input screen to the operation screen.

To solve such problems, there is provided an image processing apparatus comprising:
a display unit configured to display an operation screen including a first region with a destination selection screen in which a plurality of selectable image destinations are displayed and a second region with a destination registration screen in which selected destinations are displayed;
a detection unit configured to
   detect a selection with respect to the destination selection screen indicating a selected destination from the plurality of selectable destinations, and
   detect a transmission input;
an interface configured to connect an external input device including a plurality of keys to the image processing apparatus, and to receive an input from the external input device; and
a control unit configured to:
   in response to the selection detected by the detection unit, control the display unit to update the destination registration screen to display the corresponding selected destination,
   in response to the input being received from the external input device, control the display unit to change the first region of the operation screen from the destination selection screen to an input screen in which destination information input using the external input device is displayed,
   in response to the destination information input being received from the external input device, control the display unit to update the destination registration screen to display the corresponding input destination, and
   in response to the transmission input being detected by the detection unit, transmit an image to each destination displayed in the destination registration region.

Preferably, the input received from the external input device is a number corresponding to a first number of a FAX transmission destination.

Preferably still, the destination information received from the external input device is the FAX transmission destination.

Preferably yet, the input received from the external input device is a letter corresponding to a first letter of an iFAX transmission destination.

Suitably, the destination information received from the external input device is the iFAX transmission destination.

Suitably still, the control unit is further configured to determine whether the input received from the external input device is a letter or a number.

Suitably yet, the input screen includes one of a number input screen in which number input can be detected by the detection unit and a letter input in which letter and symbol input can be detected by the detection unit, based on whether the input received from the external input device is determined to be a letter or a number.

The invention also relates to an image processing method comprising the steps of:
displaying an operation screen including a first region with a destination selection screen in which a plurality of selectable image destinations are displayed and a second region with a destination registration screen in which selected destinations are displayed;
detecting a selection with respect to the destination selection screen indicating a selected destination from the plurality of selectable destinations;
in response to the detected selection, updating the destination registration screen to display the corresponding selected destination;
receiving an input from an external input device connected to the image processing apparatus;
in response to the input being received from the external input device, changing the first region of the operation screen from the destination selection screen to an input screen in which destination information input using the external input device is displayed;
receiving destination information input from the external input device;
in response to the destination information input being received from the external input device, updating the destination registration screen to display the corresponding input destination;
detecting a transmission input with respect to the operation screen; and
in response to the transmission input being detected with respect to the operation screen, transmitting an image to each destination displayed in the destination registration region.

Preferably, the input received from the external input device is a number corresponding to a first number of a FAX transmission destination.

Preferably still, the destination information received from the external input device is the FAX transmission destination.

Preferably yet, the input received from the external input device is a letter corresponding to a first letter of an iFAX transmission destination.

Suitably, the destination information received from the external input device is the iFAX transmission destination.

Suitably still, the method further comprises the step of:
determining whether the input received from the external input device is a letter or a number.

In the above method, the input screen preferably includes one of a number input screen in which number input can be detected by the detection unit and a letter input in which letter and symbol input can be detected by the detection unit, based on whether the input received from the external input device is determined to be a letter or a number.

The invention further relates to a non-transitory computer readable medium containing instructions for causing an image processing apparatus to perform the steps of the image processing method defined above.

The invention also concerns a computer program product storing executable code for the image processing method defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram schematically illustrating an example configuration of an image processing apparatus according to an embodiment.
FIG. 2 illustrates a first display screen displayed by the image processing apparatus.
FIG. 3 illustrates a second display screen displayed by the image processing apparatus.
FIG. 4 illustrates an example destination ID input screen displayed by the image processing apparatus.
FIGS. 5-7 are flowcharts illustrating an example sequence of operations for FAX processing performed by the image processing apparatus.

### DETAILED DESCRIPTION

According to an embodiment, there is provided an image processing apparatus (and the corresponding system) including a user interface having excellent operability, and a destination setting method used in the image processing apparatus.

An image processing apparatus according to an embodiment includes a display unit that displays an operation screen including a first region with a destination selection screen in which a plurality of selectable image destinations are displayed and a second region with a destination registration screen in which selected destinations are displayed. A detection unit detects a selection with respect to the destination selection screen indicating a selected destination from the plurality of selectable destinations, and detects a transmission input. An interface connects an external input device including a plurality of keys to the image processing apparatus, and receives an input from the external input device. In response to the selection detected by the detection unit, the display unit updates the destination registration screen to display the corresponding selected destination. In response to the input being received from the external input device, the display unit changes the first region of the operation screen from the destination selection screen to an input screen in which destination information input using the external input device is displayed. In response to the destination information input being received from the external input device, the display unit updates the destination registration screen to display the corresponding input destination. In response to the transmission input being detected by the detection unit, an image is transmitted to each destination displayed in the destination registration region.

Hereinafter, an embodiment will be described in detail with reference to the drawings.

First, the configuration of a multi-functional peripheral (MFP) 1 serving as an image processing apparatus will be described.

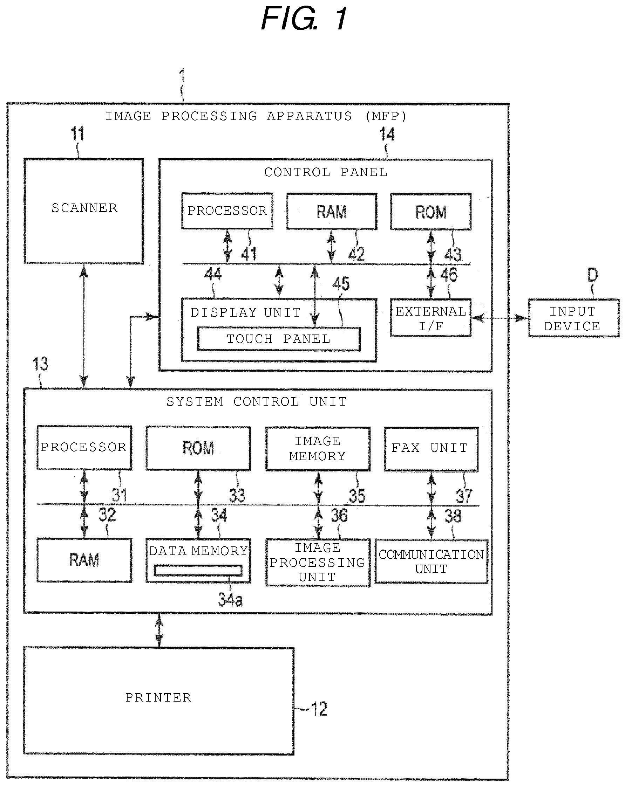

FIG. 1 is a block diagram illustrating an example configuration of the MFP 1.

The multi-functional peripheral (MFP) 1 includes a scanner 11, a printer 12, a system control unit 13, and a control panel 14. The scanner 11, the printer 12, and the control panel 14 are connected to the system control unit 13.

The scanner 11 is a device that optically reads an image of a document and converts the image into image data. The scanner 11 reads an image of a document set on a document table glass or an image of a document supplied by an automatic document feeding device (ADF). For example, the scanner 11 includes a photoelectric conversion unit including a CCD line sensor that converts a one-line image in a main scanning direction on the document into image data. The scanner 11 reads an image of the document by scanning the document using the CCD line sensor in a sub-scanning direction of the document. The scanner 11 scans the document according to an operation instruction from the system control unit 13. The scanner 11 outputs the read image (image data) of the document to the system control unit 13. The scanner 11 functions as an acquisition unit that acquires the image data of the document.

The printer 12 forms an image on an image forming medium such as a sheet. The printer 12 prints the image on the sheet based on image data supplied from the system control unit 13 under various printing conditions designated from the system control unit 13. The printing conditions which can be designated by the printer 12 are set in accordance with the specification of the printer 12.

As the printer 12, any type of image forming printers can be used. For example, the printer 12 may be an electrographic printer, an ink jet type printer, or a thermal transfer type printer.

The system control unit 13 generally controls the entire MFP 1. The system control unit 13 is connected to units of the MFP 1, such as the scanner 11, the printer 12, and the control panel 14. The system control unit 13 performs bidirectional communication with the scanner 11, the printer 12, and the control panel 14. The system control unit 13 generally controls operations of units such as the scanner 11, the printer 12, and the control panel 14. The system control unit 13 performs various processes such as image processing.

In the example of the configuration illustrated in FIG. 1, the system control unit 13 includes a processor 31, a RAM 32, a ROM 33, a data memory 34, an image memory 35, an image processing unit 36, a FAX unit 37, and a communication unit 38. The processor 31, the RAM 32, the ROM 33, and the data memory 34 function as a processing unit that performs control and various processes.

The processor 31 functions as a control unit. The processor 31 functions according to a program. The processor 31 is, for example, a CPU. The processor 31 achieves various functions by executing programs stored by the ROM 33 or the data memory 34. The RAM 32 is a working memory. The RAM 32 is, for example, a volatile memory. The RAM 32 reads a program to be executed or functions as a buffer memory. The ROM 33 is a program memory. The ROM 33 is, for example, a non-rewritable nonvolatile memory. The ROM 33 stores a unique program to the MFP 1, such as setting data, and the like.

The data memory 34 stores control data, a control program, setting information, and the like. The data memory 34 is, for example, a rewritable nonvolatile memory. For example, the data memory 34 also stores default setting values for various operation modes. The data memory 34 has an address book 34a in which destination information such as mail addresses or FAX numbers associated with destination names and IDs is stored. In the address book 34a, frequently used destinations are stored as favorites. The address book 34a may be provided for each user, may be provided for each MFP, or may be provided for each group.

The address book 34a may be stored in a memory of an external apparatus with which the MFP 1 can communicate. For example, the address book 34a may be provided in a memory of a server apparatus with which the MFP 1 can communicate via the communication unit 38 or may be provided in a memory of another MFP with which the MFP 1 can communicate via the communication unit 38.

The image memory 35 includes a hard disk drive and a page memory. The image memory 35 stores a plurality of image data. The image memory 35 also functions as a page memory for storing scanned image data or image data to be printed. The image data may not necessarily be all stored in the image memory 35. For example, the image data may be stored in the data memory 34.

The image processing unit 36 processes image data. The image processing unit 36 performs image processing on image data generated by the scanner 11 from a document image. The image processing unit 36 may perform image processing on image data acquired from an external apparatus via the communication unit 38 or the FAX unit 37. For example, the image processing unit 36 generates a thumbnail image from an image scanned by the scanner 11. The processor 31 may perform some or all of the image processing functions of the image processing unit 36.

The FAX unit 37 is a FAX interface that performs facsimile communication. The FAX unit 37 performs FAX transmission of data to a FAX number set by the processor 31. The communication unit 38 is a network interface that performs data communication with an external apparatus via a network such as the Internet. The communication unit 38 performs data communication by transmitting image data obtained by scanning a document to a data transmission address set by the processor 31.

The control panel 14 is a user interface. The control panel 14 displays a guidance for a user or receives an operation instruction by the user. The control panel 14 includes a processor 41, a RAM 42, a ROM 43, a display unit 44, a touch panel 45, and an external interface (I/F) 46.

The processor 41 controls the control panel 14. The processor 41 is an integrated circuit that executes a program. The processor 41 is, for example, a CPU. The processor 41 achieves various processing functions by executing programs stored in the ROM 43. The processor 41 supplies information input to each unit of the control panel 14 to the system control unit 13. The processor 41 controls each unit of the control panel 14 according to a control signal from the system control unit 13.

The RAM 42 is a working memory. The RAM 42 is, for example, a volatile memory. The ROM 43 is a nonvolatile program memory. The ROM 43 may include a nonvolatile memory in which rewriting is enabled to update a program, control data, setting information, and display data.

The display unit 44 displays an operation screen including, for example, operation guidance. The display unit 44 is, for example, a liquid crystal display device. The display unit 44 includes a touch panel 45 on a display screen. The touch panel 45 functions as an operation unit. The touch panel 45 detects a spot at which the user touches on the display screen of the display unit 44. The touch panel 45 supplies information indicating the position touched by the user as a detection signal to the processor 41. The operation unit may be capable of detecting a selection of a displayed icon or may be, for example, an operation device such as a pointing device.

The processor 41 controls a screen displayed on the display unit 44. The processor 41 displays various operation screens on the display unit 44 according to instructions from the system control unit 13. For example, the processor 41 displays a preview display screen on which thumbnail images of scanned images of a plurality of pages are arranged, on the display unit 44 according to an instruction from the system control unit 13.

The processor 41 specifies a position input (touched) by the user on the display screen of the display unit 44 based on a detection signal by the touch panel 45. For example, the processor 41 specifies an icon (instruction content) selected by the user based on the display position of the icon displayed on the display unit 44 and the touch position of the user detected by the touch panel 45. The processor 41 supplies information indicating the detected instruction content to the processor 31 of the system control unit 13. The processor 41 may detect content of an operation instruction according to a touch operation (i.e., a touch state such as a movement distance or a movement speed of the touch position) performed on the display screen by the user and detected by the touch panel 45.

The external interface (I/F) 46 is an interface that is connected to an input device D serving as an external device. The external I/F 46 connects to an input device for inputting a number or an input device for inputting an address as the external input device D. The input device for inputting a number is, for example, a numeric keypad. The input device for inputting an address is, for example, a keyboard. The external I/F 46 may be physically connected to the external input device D or may be connected to the external input device D through wireless communication. For example, the external I/F 46 may be an interface that conforms to a general standard such as a universal serial bus (USB).

Next, an example of a display screen displayed on the display unit 44 of the control panel 14 of the MFP 1 according to the embodiment will be described.

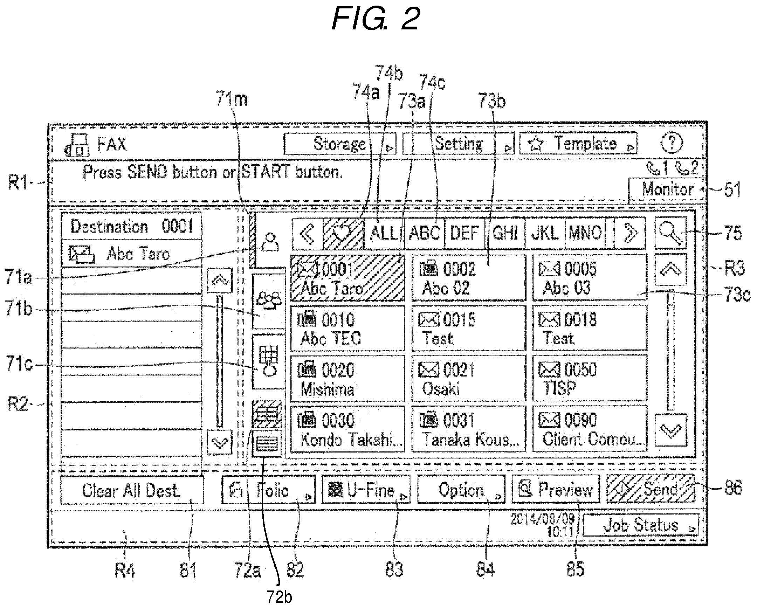

FIG. 2 illustrates a first destination setting screen displayed on the display unit 44 in a FAX mode of the MFP 1.

The destination setting screen includes a guidance display region R1, a destination display region R2, a destination input region R3, and an operation button region R4. The guidance display region R1 is a region on the upper side of the display unit 44. The destination display region R2 is a region on the left side of the display unit 44. The destination input region R3 is a region on the right side of the display unit 44. The operation button region R4 is a region on the lower side of the display unit 44.

In the guidance display region R1, an operation guidance is displayed. In the guidance display region R1, an operation button or the like may also be displayed in addition to the operation guidance. For example, in the example illustrated in FIG. 2, a monitor button 51 is displayed in the guidance display region R1. The monitor button 51 is a button for selecting on-hook transmission of FAX. In the destination display region R2, information indicating a registered (selected) destination is displayed. In the destination display region R2, for example, information indicating a registered destination is displayed in a list format.

In the destination input region R3, an operation screen on which a destination is selected or directly input is displayed. The operation screen displayed in the destination input region R3 may be a destination selection screen or a direct input screen (input screen). The destination selection screen provides for selecting a destination as a transmission destination from destinations registered in the address book 34a. The destination selection screen (address book screen), for example, may have a button format in which a button (icon) corresponding to each destination is displayed. As another example, the destination selection screen may have a list format in which each destination is displayed in a list. The direct input screen (input screen), for example, may have a number (numeral) input screen (FAX number input screen) or an address input screen (interface FAX, or iFAX, destination input screen). The number (numeral) input screen (FAX number input screen) is a direct input screen through which a FAX number is input. The address input screen (iFAX destination input screen) is a direct input screen through which a data transmission address is input. The screens displayed in the destination input region R3 will be described in detail later.

In the operation button region R4, various operation buttons are displayed. In the example illustrated in FIG. 2, a clear all button 81, a size button 82, a resolution button 83, an option button 84, a preview button 85, a transmission button 86, and the like are displayed in the region R4.

The clear all (Clear All Dest.) button 81 is a button for clearing of all the registered destinations. The size (Folio) button 82 is a button for selecting the size of an image. The resolution (U-fine) button 83 is a button for selecting the resolution of an image. The option (Option) button 84 is a button for selecting option settings. The preview (Preview) button 85 is a button for selecting a preview display of an image.

The transmission (Send) button 86 is a button for starting a transmission process. The transmission button 86 is displayed to be selectable when at least one destination is set. An operation when the transmission button 86 is pushed may be set by the user. For example, when the transmission button 86 is pushed, the MFP 1 may be set to start directly FAX transmission. Alternatively, the MFP 1 may be set to display a destination confirmation screen when the transmission button 86 is pushed and start the FAX transmission after confirmation of a destination is provided.

Next, an operation screen displayed in the destination input region R3 of the destination setting screen will be described.

FIG. 2 illustrates a display example of the destination selection screen with the button format. In the example illustrated in FIG. 2, the destination input region R3 includes three tabs 71 a, 71b, and 71c for selecting screens to be displayed. In the example illustrated in FIG. 2, the destination input region R3 includes a selection button 72a and a selection button 72b. Further, in the example illustrated in FIG. 2, a mark 71m is displayed in the tab 71a. The mark 71m indicates a tab which is selected among the three tabs 71a, 71b, and 71c. In the example illustrated in FIG. 2, the mark 71m indicates that the tab 71a is currently selected.

The first tab 71 a is a key for selecting display of the destination selection screen to select a destination of each individual. The second tab 71b is a key for selecting display of the destination selection screen to select a destination in units of groups. The third tab 71c is a key for selecting display of the direct input screen (the number input screen or the address input screen) to directly input information on the destination (a FAX number or an iFAX address).

When the first tab 71a or the second tab 71b is selected, the selection button 72a and the selection button 72b are displayed in the destination input region R3. The selection button 72a is a button to display the destination selection screen in the button (icon) format. The selection button 72b is a button to display the destination selection screen in the list format.

Here, the destination selection screen when the first tab 71 a is selected will be described with reference to FIG. 2. The destination selection screen when the second tab 71b is selected can be achieved with the same configuration as the destination selection screen when the first tab 71 a is selected except that the destination is selected in units of groups.

Here, an example of the destination selection screen will be described.

When the selection button 72a is selected, the destination selection screen of the button (icon) format is displayed in the destination input region R3. The destination selection screen of the button format is displayed such that buttons 73 (73a, 73b, etc.) corresponding to destinations registered in the address book 34a are listed, as illustrated in FIG. 2. In the buttons 73a, 73b, etc., information (for example, destination names or IDs) indicating the corresponding destinations are displayed. The buttons 73a, 73b, etc. can be selected on the touch panel 45. The touched button is displayed so that a selection state is indicated (for example, displayed in a reverse form or displayed with a predetermined color). The destination corresponding to the button in the selection state is selected (registered) as a destination and is displayed in the destination display region R2. Further, when the button corresponding to a previously selected destination is touched, the button enters a non-selection state, and the corresponding destination is cleared from the destinations and is also cleared from the destination display region R2.

The destination selection screen illustrated in FIG. 2 includes condition tabs 74a, 74b, 74c, etc. for narrowing down the destinations to be actually displayed in the destination input region R3. The condition tab 74a is for displaying frequently used destinations (favorites). When the condition tab 74a is selected, a display sequence of the buttons of the destinations set as the favorites may be set by the user. For example, the buttons of the destinations may be arranged in the sequence set in advance by the user or may be displayed to be arranged in an order of frequency of use.

The condition tab 74b is a key for selecting that the buttons of all the destinations registered in the address book 34a are displayed in an alphabetical order of the initial letters of the destination names. Alternatively, when the condition tab 74b is selected, the buttons of all the destinations registered in the address book 34a may be displayed in the order of the IDs (ID numbers) in the region R3. The condition tab 74c, etc. is a key for selecting that the buttons of the destinations displayed by the initial letters of the destination names registered in the address book 34a are narrowed down. For example, when the condition tab 74c displayed as "ABC" is selected, buttons corresponding to the destination with the initial letter "A", "B", or "C" of the destination name are displayed.

Further, the destination selection screen illustrated in FIG. 2 includes a search button 75. The search button 75 is a key for selecting to input a condition to narrow down the displayed destinations. When the search button 75 is selected, an input screen of a search condition is displayed on the destination selection screen. When a search is performed in a state in which the search condition is input on the input screen of the search condition, a list of the buttons of the destinations corresponding to the search condition is displayed on the destination selection screen.

When the selection button 72b is selected, the destination selection screen is displayed in the destination input region R3 in the list format. On the destination selection screen displayed in the list format, information indicating the destinations registered in the address book is displayed in a list. For example, the list may be displayed in a table format for each destination. A display button of each destination can be selected on the touch panel 45. The touched display button of the destination is displayed so that a selection state is indicated (for example, displayed in a reverse form or displayed with a predetermined color). The destination displayed in the button in the selection state is selected (registered) as a destination and is displayed in the destination display region R2. When the display button of an already selected destination is touched, the display button is changed to a non-selection state. The corresponding destination is also cleared from the registered destinations and is cleared from the destination display region R2.

When the destination selection screen is displayed in the list format, the same condition tabs 74a, 74b, 74c, etc. as those in FIG. 2 for narrowing down the destinations displayed in the list on the destination input region R3 may be displayed. When the condition tab 74a is selected, a list indicating the frequently used destinations (favorites) in a set sequence may be displayed on the destination selection screen of the list format. When the condition tab 74b is selected, all of the destinations are arranged in the alphabetical order on the destination selection screen of the list format. When the condition tab 74b, 74c, etc. is selected, a list of the destinations narrowed down by initial letters of the destination names is displayed on the destination selection screen of the list format.

Next, an example of the number input screen serving as the direct input screen will be described.

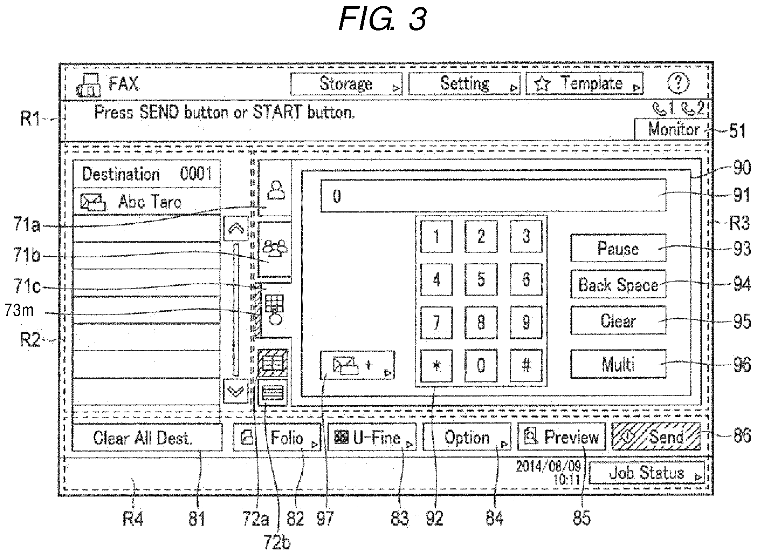

FIG. 3 illustrates a second destination setting screen displayed on the display unit 44 in the FAX mode of the MFP 1.

The destination setting screen illustrated in FIG. 3 is a number input screen 90 for which the destination input region R3 serves as the direct input screen. In the example illustrated in FIG. 3, a mark 73m indicates that the third tab 71c is being selected. That is, when a direct input of a number is received, the display unit 44 causes the third tab 71c to enter a selection state and displays the number input screen 90 illustrated in FIG. 3 in the destination input region R3. The number input screen 90 illustrated in FIG. 3 is a direct input screen on which a FAX number is directly input in the FAX mode. The number input screen 90 includes a number input field (input display field) 91, numeric keys 92, a pause button 93, a back space button 94, a clearance button 95, an addition button 96, and a switch button 97.

In the number input field (the input display field) 91, input numbers are displayed. In the number input field 91, the input numbers are additionally displayed in an input order. When an external input device (for example, a numeric key or a keyboard) with which numbers can be input is connected to the MFP 1, numbers input with the input device are displayed in the number input field 91. In the number input field 91, numbers input to the displayed numeric keys 92 are displayed.

The numeric keys 92 includes number buttons of 0 to 9, an asterisk button, and a hash button. An input of the numeric keys 92 into the number buttons is detected by the touch panel 45. When an external input device (for example, a numeric key or a keyboard) with which numbers can be input is connected to the MFP 1, the numeric keys 92 may not be displayed. When the external input device is connected, an erroneous operation by the user can be prevented by not displaying the numeric keys 92.

The pause button 93 functions as a pause key. The back space button 94 is a button for clearing one of the input numbers. Whenever the back space button 94 is selected, numbers displayed in the number input field 91 are cleared one by one from the last (the left end of a number string). The clearance button 95 is a button for selecting that all of the input numbers are cleared. When the clearance button 95 is selected, the numbers displayed in the number input field 91 are all cleared.

The addition button 96 is a button for selecting that the input numbers are settled as a destination. The addition button 96 is also a button for selecting that subsequent numbers will be input after the input numbers. When the addition button 96 is selected, the numbers displayed in the number input field 91 are registered as one destination and displayed in the destination display region R2. Then, the display content is cleared in the number input field 91.

The switch button 97 is a button to switch to the address input screen. The address input screen is a direct input screen on which iFAX address (data transmission address) is input.

Next, an example of the address input screen serving as the direct input screen will be described.

The address input screen is an operation screen on which letters, symbols, and the like used to write an address such as alphabets are directly input. For example, the address input screen includes an address input field (input display field), a clearance button, an addition (determination) button, and a keyboard display button.

In the address input field, information such as letters, signals, or the like of the input address is displayed. For example, when the external input device (for example, a keyboard) D is connected to the MFP 1, information input with the input device D is displayed in the address input field. The clear button is a button for clearing all of the information (input address) displayed in the address input field. The addition button is a button for selecting that the currently input information (address) is settled as a destination and to input a subsequent address. The keyboard display button is a button for displaying a software keyboard. The software keyboard is a touch key that includes button groups for inputting letters and signals as an address with the touch panel 45.

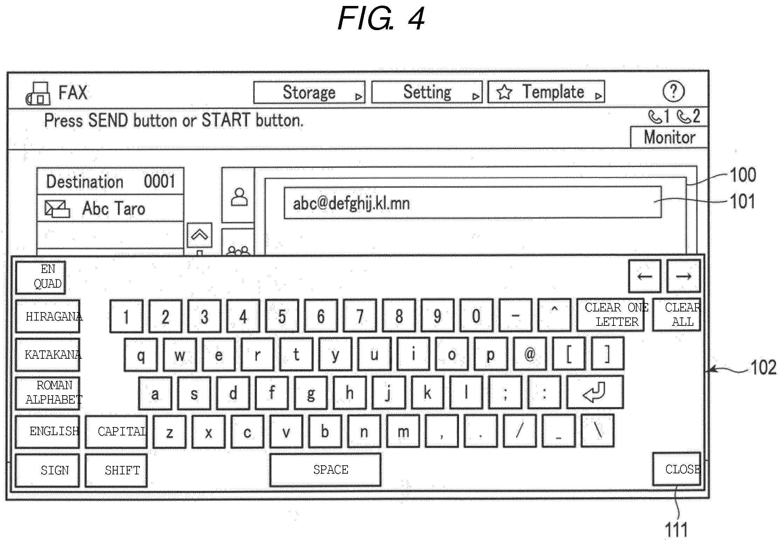

FIG. 4 illustrates a display screen in which a software keyboard 102 is displayed on the address input screen 100. In the address input screen 100 illustrated in FIG. 4, the software keyboard 102 is displayed when the address input field (input display field) 101 is displayed. In the example illustrated in FIG. 4, buttons (soft key) of letters and signals displayed as the software keyboard 102 can be input with the touch panel 45. In the example illustrated in FIG. 4, information input with the buttons of the software keyboard 102 is displayed in the address input field 101. The software keyboard 102 includes a close button 111. When the close button 111 is touched, the software keyboard 102 is closed.

The MFP 1 can receive the address information input with a keyboard serving as the external input device D connected to the external I/F 46 when the address input screen is displayed. When the external input device capable of inputting the address information is connected to the MFP 1, the software keyboard is not displayed to prevent an erroneous operation of the user.

Next, an operation of destination setting in the FAX mode in the MFP 1 will be described.

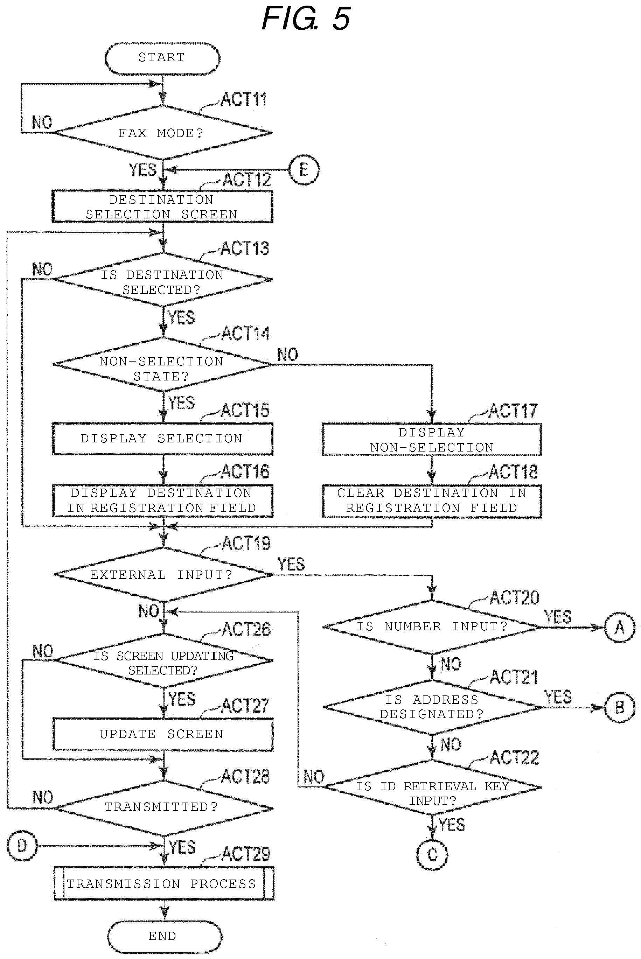

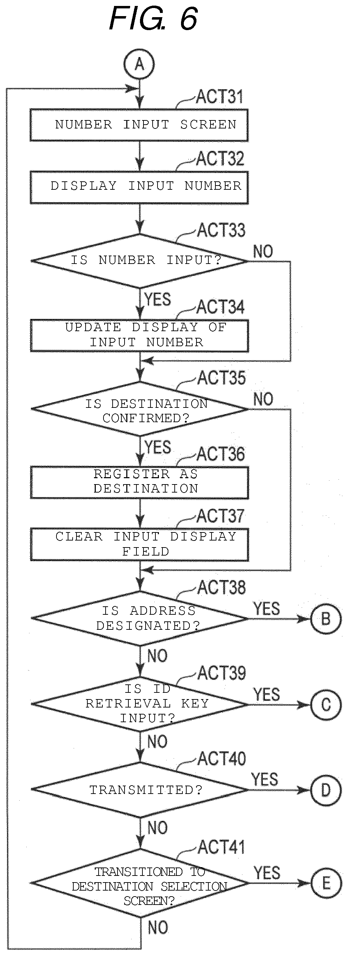

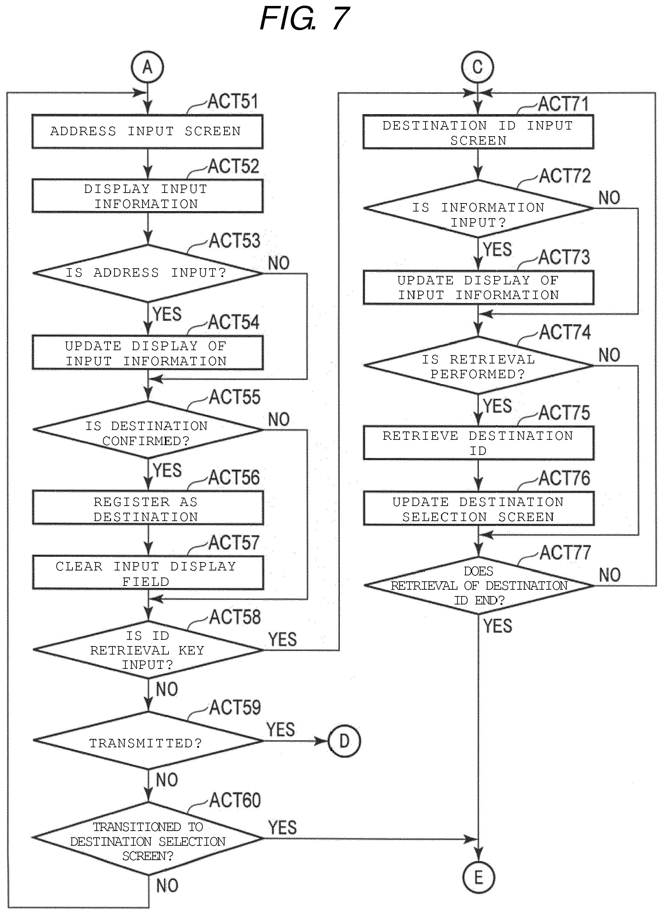

FIGS. 5 to 7 are flowcharts illustrating example operations of the destination setting in the FAX mode in the MFP 1.

The processor 31 of the system control unit 13 displays a main menu screen on the display unit 44 of the control panel 14 in a standby state. The main menu screen is an operation screen on which various processing modes including the FAX mode can be selected. When the FAX mode is designated (YES in ACT 11), the processor 31 displays the destination setting screen on which the destination of the FAX is set on the display unit 44 (ACT 12). Here, when the FAX mode is selected, a first displayed screen can be set as the setting of the initial screen. Here, for example, the description will be made assuming that the destination setting screen including the destination selection screen of the button format illustrated in FIG. 2 is set as the initial screen.

When the destination selection screen is displayed, the processor 31 receives various operation instructions on the screen detected by the touch panel 45. For example, when the button 73a etc. corresponding to the destination is selected on the destination selection screen, the processor 31 sets a display state indicating that the destination corresponding to the selected button is selected (registered). The processor 31 updates the destination input region R3 of the destination selection screen according to the designated tab when one of the tabs 71a, 71b, and 71c is selected. Further, when one destination is registered, the processor 31 sets the transmission button 86 to be selectable. When the transmission button 86 is selected (YES in ACT 28), the processor 31 performs the transmission process of transmitting the FAX to the registered destination (ACT 29).

When the destination selection screen is displayed, the processor 31 receives various operation instructions on the screen detected by the touch panel 45. When a display spot (button) of one destination in the destination input region R3 is selected (YES in ACT 13), the processor 31 determines whether the selected destination is already registered (selected) (ACT 14).

When the processor 31 determines that the button of an unregistered (not previously selected) destination is selected (YES in ACT 14), the processor 31 sets a display state indicating that the display spot of the selected button is registered (ACT 15). When the button of the unregistered destination is selected, the processor 31 displays the destination of the selected button as the registered destination in the destination display region (registration field) R2 (ACT 16). For example, the processor 31 additionally displays the registered destination in the destination display field R2 and updates the total number of registered destinations.

When the processor 31 determines that the button of the registered destination is selected (NO in ACT 14), the processor 31 releases the registration of the destination corresponding to the selected button. When the processor 31 releases the registration of the destination of the selected button, the processor 31 sets a display state indicating that the display spot of the selected button in the destination input region R3 is unregistered (unselected) (ACT 17). The processor 31 deletes the display of the destination of which the registration is released in the destination display region (registration field) R2 (ACT 18). That is, the processor 31 deletes the display of the destination of which the registration is released in the destination display region R2, and updates a total number of destinations to a number obtained by subtracting the destination of which registration is released.

The processor 31 receives an input of information from the input device (the external input device) D connected to the external I/F 46 (ACT 19). For example, the input device D is assumed to be a keyboard that includes a plurality of keys such as number keys (numeric keys), letter keys, sign keys, and function keys. The processor 31 monitors an input to each key of the input device D connected via the external I/F 46. When an input to the external input device D is detected (YES in ACT 19), the processor 31 determines whether the information input with the external input device D is a number (numeral) for designating the FAX number (ACT 20). For example, the processor 31 determines that the number is input when the input to a number key of the keyboard serving as the external input device D or a certain key included in the numeric keys is detected.

When the processor 31 determines that the information input with the external input device D is a number (YES in ACT 20), the processor 31 updates the destination input region R3 from the destination selection screen to the number input screen (FAX number input screen) serving as the direct input screen (ACT 31). For example, when the number key is input with the external input device D, the processor 31 displays the number input screen illustrated in FIG. 3 in the destination input region R3.

The number input screen displayed when the number is input with the external input device D is not limited to the configuration illustrated in FIG. 3. For example, the number input screen displayed when the number is input with the external input device D may be a configuration in which the numeric key 92 is not displayed.

When the information input with the external input device D is not the number (NO in ACT 20), the processor 31 determines whether the information input with the external input device D is information designating an address as the destination of iFAX (ACT 21). For example, the processor 31 determines that the information designating the address is input when an input to a key for designating an address such as a letter, a signal, or the like (referred to as an address designation key) with the external input device D is detected.

When the processor 31 determines that the information input with the external input device D is the information designating the address serving as the destination of iFAX (YES in ACT 21), the processor 31 updates the destination input region R3 from the destination input screen to the address input screen (iFAX destination input screen) serving as the direct input screen (ACT 51). For example, when the address designation key is input with the external input device D, the processor 31 displays the address input screen in the destination input region R3.

When the information input with the external input device D is not the information designating the address (NO in ACT 21), the processor 31 determines whether the information input with the external input device D is the key designating retrieval of a destination ID (ACT 22). A key for designating retrieval of the destination ID (hereinafter referred to as an ID retrieval key) is assigned to a specific key included in the input device D. For example, the ID retrieval key is assigned to a certain function key of a keyboard serving as the input device D.

When the processor 31 determines that the key input with the external input device D is the ID retrieval key (YES in ACT 22), the processor 31 displays a destination ID input screen on which the destination ID is directly input on the destination setting screen displayed on the display unit 44 (ACT 61). For example, the processor 31 displays the ID input screen as a pop-up screen on the destination selection screen which is being displayed. For example, the destination ID input screen includes an input display field in which the input destination ID is displayed and an OK button for designating retrieval by information displayed in the input display field. In the destination ID input screen, a button for inputting information such as a number as the destination ID may be displayed. For example, when the destination ID is set in number, a numeric key may be displayed.

When there is no input to the external input device D (NO in ACT 19) or there is no input to the number key, the address destination key, or the ID retrieval key in the input device D (NO ACT 22), the processor 31 receives an selection of screen updating on the destination selection screen (ACT 26). When the selection of the screen updating is received (YES in ACT 26), the processor 31 updates the display of the destination setting screen according to the selection (ACT 27). For example, when a selection state of the tabs 71a to 71c is changed, the processor 31 changes the display screen of the destination input region R3. When the selection state of the selection buttons 72a and 72b is changed, the processor 31 changes the display format of the destination selection screen displayed in the destination input region R3. When the selection state of the condition tab is changed, the processor 31 changes the destination displayed in the destination input region R3.

The processor 31 receives a transmission selection by the transmission button 86 on the destination setting screen (ACT 28). When at least one destination is set, the processor 31 displays the transmission button 86 to be selectable. When the transmission button 86 is selected (YES in ACT 28), the processor 31 performs a process of transmitting the FAX to a registered destination (ACT 29). For example, when the transmission button 86 is selected, the processor 31 directly starts scanning and FAX transmission. The processor 31 may display the destination confirmation screen according to the selection of the transmission button 86 and starts the process after confirmation of the displayed destination is selected. The operation when the transmission button 86 is selected may be set by the user.

Here, a process when the number input screen 90 is displayed according to the input of the number with the external input device D (the case of YES in ACT 20) will be described.

When the input to a number key in the external input device D is detected, the processor 31 displays the number input screen (the FAX number input screen) 90 in the destination input region R3 (ACT 31). When the number input screen 90 is displayed according to the input to the number key of the input device D, the processor 31 displays a number (numeral) according to the number key input with the external input device D in the number input field 91 (ACT 32).

When the number input screen 90 is displayed, the processor 31 receives an input of a number by the external input device D or the numeric key 92 (ACT 33). When the number is input with the external input device D or the numeric key 92 (YES in ACT 33), the processor 31 displays the input number in the number input field 91 (ACT 34). The processor 31 clears one number displayed in the number input field 91 according to the input to the back space button of the input device D or the back space button 94 of the number input screen 90. The processor 31 clears all of the numbers displayed in the number input field 91 according to the input the all-clearance button of the input device D or the clearance button 95 of the number input screen 90.

When the number input screen 90 is displayed, the processor 31 receives an input to the addition button 96 for selecting determination of the input FAX number (ACT 35). When the addition button 96 is pressed (YES in ACT 35), the processor 31 displays (registers) the number displayed in the number input field 91 in the destination display region (registration field) R2 (ACT 36). When the number is displayed (registered) in the registration field R2, the processor 31 clears the number displayed in the number input field 91 (ACT 37). Accordingly, the number input screen 90 enters a state in which a number of a subsequent destination can be input.

When the number input screen 90 is displayed, the processor 31 receives an input to the switch button 97 for selecting switch to an address input screen (iFAX destination input screen) 100 (ACT 38). When the switch button 97 is input (YES in ACT 38), the processor 31 updates the screen on which the destination input region R3 is displayed from the number input screen 90 to the address input screen 100 (ACT 51).

When the number input screen 90 is displayed, the processor 31 receives an input to a specific key (for example, a function key) serving as the ID retrieval key of the external input device D (ACT 39). When the ID retrieval key of the input device D is input (YES in ACT 39), the processor 31 displays the destination ID input screen (destination ID retrieval screen) as a pop-up screen on the screen which is being displayed (ACT 71). The processor 31 may update the display of the destination input region R3 to the destination selection screen and display the destination ID input screen when the destination selection screen is displayed. The ID retrieval key may be received when the destination selection screen is displayed and may not be received when the number input screen 90 is displayed.

When the number input screen 90 is displayed, the processor 31 receives an input to the transmission button 86 (ACT 40). When the number is displayed in the number input field 91 and the transmission button 86 is selected (YES in ACT 40), the processor 31 transitions the process to the transmission process using the number displayed in the number input field 91 as one of the destinations of FAX (ACT 29). That is, when a selection of the transmission button 86 is detected, the processor 31 settles the destination displayed in the destination display region R2 and the number displayed in the number input field 91 as destinations of FAX. When the processor 31 settles the transmission of FAX, the processor 31 starts the transmission process to each of the settled destinations.

When the number input screen 90 is displayed, the processor 31 receives a selection to return the screen displayed in the destination input region R3 to the destination selection screen (ACT 12). When the selection to return the screen to the destination selection screen is detected (YES in ACT 41), the processor 31 updates the display of the destination input region R3 to the destination selection screen (ACT 12). However, when there is a FAX number displayed (registered) in the registration field R2 on the number input screen 90, the processor 31 transitions the screen to the destination selection screen with the registered FAX number set as one of the destinations.

Next, a process when the address input screen 100 is displayed according to the input to the address designation key of the external input device D (the case of YES in ACT 21) will be described.

When an input to the address designation key of the external input device D is detected, the processor 31 displays the address input screen 100 in the destination input region R3 (ACT 51). When the address input screen 100 is displayed according to an input to the address designation key (a letter key, a sign key, or the like) of the input device D (ACT 51), the processor 31 displays information in accordance with the key input with the external input device D in an address input field (input display field) 101 (ACT 52).

When the address input screen 100 is displayed, the processor 31 receives an input to the address designation key with the external input device D or a software keyboard 111 (ACT 53). When address information is input with the external input device D or a software keyboard 111 (YES in ACT 53), the processor 31 displays the input information in the address input field 101 (ACT 54). The processor 31 clears only one piece of information displayed in the address input field 101 according to an input to the back space button of the external input device D or a back space button of a software keyboard. The processor 31 clears all of the information displayed in the address input field 101 according to an input to the all-clearance button of the external input device D or an all-clearance button of a software keyboard.

When the address input screen 100 is displayed, the processor 31 receives an input to a button (the addition button or the like) for selecting determination of the input address (ACT 55). When the button selecting the determination of the address is pressed (YES in ACT 55), the processor 31 displays (registers) the address displayed in the address input field 101 in the destination display region (the registration field) R2 (ACT 56). When the address is displayed (registered) in the registration field R2, the processor 31 clears the information displayed in the address input field 101 (ACT 57). Accordingly, the address input screen enters a state in which an address of a subsequent destination can be input.

When the address input screen 100 is displayed, the processor 31 receives an input to a specific key (for example, a function key) serving as the ID retrieval key of the external input device D (ACT 58). When the ID retrieval key of the input device D is input (YES in ACT 59), the processor 31 displays the destination ID input screen as a pop-up screen on the screen which is being displayed (ACT 71). The processor 31 may update the display of the destination input region R3 to the destination selection screen and display the destination ID input screen when the destination selection screen is displayed. The ID retrieval key may be received when the destination selection screen is displayed, and may not be received when the address input screen 100 is displayed.

When the address input screen 100 is displayed, the processor 31 receives an input to the transmission button 86 (ACT 59). For example, when the address input to the address input field 101 is displayed and the transmission button 86 is selected (YES in ACT 59), the processor 31 transitions the process to the transmission process using the address displayed in the address input field 101 as one of the destinations of iFAX (ACT 29). That is, when a selection to the transmission button 86 is detected (YES in ACT 59), the processor 31 settles the destination displayed in the destination display region R2 and the address displayed in the address input field 101 as destinations of iFAX. When the processor 31 settles the transmission destination of iFAX, the processor 31 starts the transmission process to each of the settled destinations.

When the address input screen 100 is displayed, the processor 31 receives a selection to return the destination input region R3 to the destination selection screen (ACT 60). When the selection to return to the destination selection screen is detected (YES in ACT 60), the processor 31 updates the display of the destination input region R3 to the destination selection screen (ACT 12). However, when there is a destination (the address of the destination of iFAX) registered in the registration field R2 on the address input screen 100, the processor 31 updates the registered address to the destination selection screen with the registered address set as one of the destinations.

Next, a process when the destination ID input screen (the destination ID retrieval screen) is displayed according to an input to the ID retrieval key of the external input device D (the case of YES in ACT 22, 39, or 58) will be described.

When the destination ID input screen is displayed according to an input of the ID retrieval key of the external input device D (ACT 71), the processor 31 receives an input regarding the destination ID by the external input device D in the display state of the destination ID input screen (ACT 72). For example, when the destination ID includes a number, the processor 31 receives an input of the number as the destination ID by the input device D. When the information regarding the destination ID is input with the external input device D (YES in ACT 72), the processor 31 displays the input information in the ID input field provided in the destination ID input screen (ACT 73).

When the destination ID input screen is displayed, the processor 31 receives an input to a button (OK button) for selecting retrieval of the destinations based on the input information regarding the destination ID (ACT 74). When the button for selecting the retrieval of the destinations is pressed (YES in ACT 74), the processor 31 retrieves the destinations (the destination IDs) registered in the address book 34a based on the information regarding the destination ID displayed in the ID input field (ACT 75). Irrespective of the input to the button for selecting the retrieval of the destinations, the processor 31 may retrieve the destinations whenever the information regarding the destination ID is input. For example, when the destination ID includes a number, the processor 31 can perform a retrieval process of narrowing down the destinations which match in order from a high-order digits of the destination ID whenever the number is input.

When the processor 31 retrieves the destination ID based on the input information, the processor 31 updates the display of the destination input region R3 to the destination selection screen in which the buttons 73 are arranged based on the retrieval result (ACT 76). For example, the processor 31 scrolls the display of the buttons so that the button corresponding to the destination detected through the retrieval of the destination ID is displayed in the top left of the destination selection screen. The processor 31 may display the button corresponding to the destination detected through the retrieval of the destination ID on the destination selection screen. When a part of the destination ID is input and the retrieval is performed, the processor 31 may display the buttons corresponding to the plurality of detected destinations (for example, a destination group for which high-order digits of the destination ID match) on the destination selection screen.

When the destination ID input screen is displayed, the processor 31 receives an input to the button for selecting retrieval end of the destination ID (an input to the close button or an input outside the destination ID input screen) (ACT 77). When the selection to end the retrieval of the destination ID is input (YES in ACT 77), the processor 31 turns off (closes) the display of the destination ID input screen. When the selection to end the retrieval of the destination ID is not input (NO in ACT 77), the processor 31 performs the processes of ACT 71 to ACT 76 described above.

According to the embodiment, as described above, the external input device that includes number buttons for inputting numbers can be connected to the multi-functional peripheral. When the destination selection screen on which the destination of FAX is selected is displayed on the display unit and an input to a number in the external input device is detected, the multi-functional peripheral transitions the display unit from the destination selection screen to the number input screen. That is, when the user inputs the number with the external input device such as an optional numeric key, the multi-functional peripheral automatically transitions the operation screen displayed on the display unit to the number input screen. As a result, even when the input device such as the optional numeric key is connected to the multi-functional peripheral, the user can perform an operation with the user interface with good operability.

According to the embodiment, when the destination selection screen on which the destination of FAX is selected is displayed on the display unit and an input of the information designating the address with the external input device is detected, the multi-functional peripheral transitions the operation screen displayed on the display unit from the destination selection screen to the address input screen. That is, when the user inputs a character with the external input device such as a keyboard, the multi-functional peripheral automatically transitions the operation screen displayed on the display unit to the address input screen. As a result, even when the input device such as the keyboard is connected to the multi-functional peripheral, the user can perform an operation with the user interface with good operability.

A program executed by the processor of the image processing apparatus according to the above-describe embodiment is recorded on a computer-readable storage medium such as a CD-ROM, a flexible disc, a CD-R, or a digital versatile disk (DVD) in the form of files of an installable format or an executable format on a memory for supply. The program executed by the processor according to the embodiment may be supplied or distributed via a network such as the Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An image processing apparatus comprising:
a display unit configured to display an operation screen including a first region with a destination selection screen in which a plurality of selectable image destinations are displayed and a second region with a destination registration screen in which selected destinations are displayed;
a detection unit configured to
detect a selection with respect to the destination selection screen indicating a selected destination from the plurality of selectable destinations, and
detect a transmission input;
an interface configured to connect an external input device including a plurality of keys to the image processing apparatus, and to receive an input from the external input device; and
a control unit configured to:
in response to the selection detected by the detection unit, control the display unit to update the destination registration screen to display the corresponding selected destination,
in response to the input being received from the external input device, control the display unit to change the first region of the operation screen from the destination selection screen to an input screen in which destination information input using the external input device is displayed,
in response to the destination information input being received from the external input device, control the display unit to update the destination registration screen to display the corresponding input destination, and
in response to the transmission input being detected by the detection unit, transmit an image to each destination displayed in the destination registration region.

2. The apparatus according to claim 1, wherein the input received from the external input device is a number corresponding to a first number of a FAX transmission destination.

3. The apparatus according to claim 2, wherein the destination information received from the external input device is the FAX transmission destination.

4. The apparatus according to any one of claims 1 to 3, wherein the input received from the external input device is a letter corresponding to a first letter of an iFAX transmission destination.

5. The apparatus according to claim 4, wherein the destination information received from the external input device is the iFAX transmission destination.

6. The apparatus according to any one of claims 1 to 5, wherein the control unit is further configured to determine whether the input received from the external input device is a letter or a number.

7. The apparatus according to any one of claims 1 to 6, wherein the input screen includes one of a number input screen in which number input can be detected by the detection unit and a letter input in which letter and symbol input can be detected by the detection unit, based on whether the input received from the external input device is determined to be a letter or a number.

8. An image processing method comprising the steps of:
displaying an operation screen including a first region with a destination selection screen in which a plurality of selectable image destinations are displayed and a second region with a destination registration screen in which selected destinations are displayed;
detecting a selection with respect to the destination selection screen indicating a selected destination from the plurality of selectable destinations;
in response to the detected selection, updating the destination registration screen to display the corresponding selected destination;
receiving an input from an external input device connected to the image processing apparatus;
in response to the input being received from the external input device, changing the first region of the operation screen from the destination selection screen to an input screen in which destination information input using the external input device is displayed;
receiving destination information input from the external input device;
in response to the destination information input being received from the external input device, updating the destination registration screen to display the corresponding input destination;
detecting a transmission input with respect to the operation screen; and
in response to the transmission input being detected with respect to the operation screen, transmitting an image to each destination displayed in the destination registration region.

9. The method according to claim 8, wherein the input received from the external input device is a number corresponding to a first number of a FAX transmission destination.

10. The method according to claim 9, wherein the destination information received from the external input device is the FAX transmission destination.

11. The method according to any one of claims 8 to 10, wherein the input received from the external input device is a letter corresponding to a first letter of an iFAX transmission destination.

12. The method according to claim 11, wherein the destination information received from the external input device is the iFAX transmission destination.

13. The method according to any one of claims 8 to 12, further comprising the step of:
determining whether the input received from the external input device is a letter or a number.

14. A non-transitory computer readable medium containing instructions for causing an image processing apparatus to perform the steps of the image processing method according to any one of claims 8 to 13.

15. A computer program product storing executable code for the image processing method according to any one of claims 8 to 13.
